Europäisches Patentamt

**European Patent Office**

**Office européen des brevets**

(11) Publication number: **0 174 851**
**B1**

# EUROPEAN PATENT SPECIFICATION

(45) Date of publication of the patent specification:
**01.03.89**

(21) Application number: **85306475.6**

(22) Date of filing: **12.09.85**

(51) Int. Cl.⁴: **C 03 C 3/04,** C 03 C 3/064,
C 03 C 3/091, C 03 C 13/02,
C 03 C 10/00, C 03 C 11/00,
C 03 C 15/00, C 03 C 25/06 //
B01J20/10, B01J21/06,
B01J32/00, B01D13/04,
C12N11/14

(54) Porous titanate glass and a method of producing it.

(30) Priority: **12.09.84 JP 189715/84**
**19.12.84 JP 266330/84**

(43) Date of publication of application:
**19.03.86 Bulletin 86/12**

(45) Publication of the grant of the patent:
**01.03.89 Bulletin 89/9**

(84) Designated Contracting States:
**DE FR GB NL**

(56) References cited:
**AT-B- 299 435**
**GB-A- 1 077 195**
**US-A- 3 650 721**

**The file contains technical information submitted after
the application was filed and not included in this
specification**

(73) Proprietor: **Kokubu, Toshinori, 34-7 Toshimicho,
Miyakonojo-shi Miyazaki-ken (JP)**

(72) Inventor: **Kokubu, Toshinori, 34-7 Toshimicho,
Miyakonojo-shi Miyazaki-ken (JP)**

(74) Representative: **Harvey, David Gareth et al, Graham
Watt & Co. Riverhead, Sevenoaks Kent TN13 2BN (GB)**

ACTORUM AG

## Description

The present invention relates to a method of producing porous titanate glass and the glass made by the method. The titania-containing porous glass (referred to as porous titanate glass hereinafter) has a glass skeleton comprising titania and silica, and the invention extends to a method of producing sheets and fibers of such glass.

A porous glass having an indefinite number of pores with a pore size of several Angstroms to several thousands of Angstroms (1 Å = 0.1 nm) has already been proposed as suitable for use (inter alia) as adsorbents, catalysts, catalyst supports, gas sensors, ultrafiltration media, and carriers for immobilized enzymes. Such porous glasses are generally made from oxide glass. Those made of a $SiO_2$ - $B_2O_3$ - $Na_2O_3$ composition system and those produced from a $SiO_2$ - $B_2O_3$ - $Na_2O_3$ - $Al_2O_3$ - $CaO$ - $MgO$ composition system are known and in practical use. All of these porous glasses have a high silica content and are used for the production of high silica glasses such as Vycor glass or the like. Such porous glasses that are produced from the $SiO_2$ - $B_2O_3$ - $Na_2O$ composition system and the $SiO_2$ - $B_2O_3$ - $Na_2O$ - $Al_2O_3$ - $CaO$ - $MgO$ composition system are characterized by their pore size and specific surface area being controllable by regulating the heat treatment conditions during the phase separation process during which time they have relatively large pores.

Howerer, when producing a porous glass from the $SiO_2$ - $B_2O_3$ - $Na_2O$ and $SiO_2$ - $B_2O_3$ - $Na_2O$ - $Al_2O_3$ - $CaO$ - $MgO$ composition systems, the raw fused glass has the disadvantage of exhibiting such a high viscosity that it is difficult to remove bubbles, resulting in requiring a fusion process of more than two hours at 1,500°C.

Instead of producing a porous glass having a glass skeleton containing a high proportion of silica by the above described manufacturing method, it has also been proposed to provide a porous glass having a glass skeleton produced from a titania gel or metal alkoxide. Howerer, such porous glasses had the disadvantage of requiring a prolonged time for vitrification, and controlling the pore size of the glasses was difficult.

After extensive research and experiments in an attempt to overcome the foregoing shortcomings of the conventional porous glasses and methods of producing them, the inventor has developed a titania-containing porous glass having titania and silica as a glass skeleton in which the glass composition weight ratio of titania to silica may be in the range of 0.8 to 1.7, in distinct contrast to the high silica content porous glass produced by utilizing the phase separation of the conventional oxide glass, or the porous glass having a titania glass skeleton produced from titania or metal alkoxide.

The porous titanate glass (titanic acid - containing porous glass) of this invention provides a higher heat resistance and chemical resistance as well as a higher chemical reactivity because of its Ti-OH group as compared with the prior art porous glasses.

Through further research and experiments conducted on methods of producing porous titanate glass having the advantages as described above, it has ben has been found that such porous glass may be very efficiently produced from a five-component composition of $TiO_2$ - $SiO_2$ - $Al_2O_3$ - $B_2O_3$ - $CaO$ or a six-component composition of $TiO_2$ - $SiO_2$ - $Al_2O_3$ - $B_2O_3$ - $CaO$ - $MgO$ (or alkali metal oxide or metallic element oxide).

The present inventor has also conducted research and experiments with a view to overcoming the problems involved in making the porous titanate glass into sheet and fibers. The problems include difficulties with the fusing step, a tendency for crystallization to occur during the quench-vitrification step, and a tendency for cracking and delaminating to take place during the acid treating step. II has been found that cracking and delaminating are attributed primarily to the crystallization and the expansion of glass during the acid treating step and that such cracking and delaminating may be prevented by prescribing for the composition of the raw material for glass according to this invention.

The foregoing problems confronting the production of porous titanate glass have not been noted or addressed in the prior art, of which US-A-3 650 721; GB-A-1 077 195 and AT-B-299 435 may be mentioned. US-A-3 650 721 discloses a method of making microporous glass wherein the basic composition, an alkali borosilicate composition is melted, shaped at elevated temperature, annealed at elevated temperature to cause phase separation and thereafter leached in acid to remove the borate phase. GB-A-1 077 195 teaches a method of making high silica, devitrified glass ballotini from an aluminosilicate glass composition to which up to 15% $TiO_2$ is added as a nucleation agent for the devitrification stage. There is no teaching of leaching out acid-soluble fractions from the devitrified product. AT-B-299 435 concerns the production of spun $TiO_2/SiO_2$ fibres starting from a colloidal acidic aqueous solution; after spinning the fibres are oxidised by an elevated temperature heat treatment which, by suitable choice of the operating conditions can yield porous fibres. No acid leaching step is taught. As will be apparent from the following description, the present invention adopts a wholly different route for the production of a porous titanate glass.

This invention has aimed to produce a porous titanate glass which exhibits high heat resistance and chemical resistance (alkali resistance) as well as high chemical ractivity, and provides a method of producing the titanate glass in an efficient manner while controlling the pore size and specific surface area thereof.

Desirably, a method according to te invention can produce such porous titanate glass of homogeneous quality in a shortened time.

Beneficially, a method according to the invention can produce a porous titanate glass in which the raw materials are easily fusible, and which is less liable to crystallize during the fusing step and has very little tendency to crack during the acid treating step.

The invention also aims to produce sheets and fibers of porous titanate glass having titania and silica as a glass skeleton, and which have a wide range of applications as catalysts, gas sensors, reaction separating membranes, adsorbents and the like.

According to the present invention, a method of producing a porous titanate glass having a glass skeleton comprising titania ($TiO_2$) and silica ($SiO_2$) comprises the steps of mixing starting materials containing 15 to 34 mol % titanium oxide ($TiO_2$), 17 to 38 mol % silicic anhydride ($SiO_2$), 5 to 20 mol % aluminum oxide ($Al_2O_3$), 1 to 10 mol % boron oxide ($B_2O_3$), and 10 to 30 mol % calcium oxide (CaO); heating and fusing the materials, followed by quenching them to form a multi-component oxide glass composed of vitrified $TiO_2$ - $SiO_2$ - $Al_2O_3$ - $B_2O_3$ - CaO; reheating the oxide glass at a temperature of 600°C to 900°C for a predetermined period of time to form an opaline or devitrified separate-phase glass; and then immersing the separate-phase glass in an acid solution to leach out and remove acid-soluble components, leaving a porous titanate glass having a $TiO_2/SiO_2$ weight ratio in the range of 0.8 to 1.7.

Preferably, the starting materials contain 25.0 mol % of titanium oxide, 31.0 mol % of silicic anhydride, 12.5 mol % of aluminum oxide, 7.5 mol % of boron oxide, and 24.0 mol % of calcium oxide.

In producing the aforesaid porous glass, the starting materials can comprise principal components consisting of the aforesaid oxides and accessory components including at least one of magnesium oxide, alkali metal oxide and metallic element oxide so as to form, after heating, fusing and quenching, a multi-component oxide glass having a composition of vitrified $TiO_2$ - $SiO_2$ - $Al_2O_3$ - $B_2O_3$ - CaO - MgO and/or $X_2O$ and/or $Y_mO_n$ (wherein $X_2O$ is alkali metal oxide and $Y_mO_n$ is metallic element oxide).

Preferably according to this particular method, the starting materials contain, as aforesaid, 15-34 mol % of titanium oxide, 17-38 mol % e.g. 17-34 mol % of silicic anhydride, 5-20 mol % of aluminum oxide, 1-10 mol % of boron oxide, 10-30 mol % of calcium oxide, and 10 or less mol % of magnesium oxide, 5 or less mol % of alkali metal oxide, and 5 or less mol % of metallic element oxide. Pfeferably, the ratio of silicic anhydride to titanium oxide ($SiO_2/TiO_2$) in the starting materials is 0.4 to 2.0.

Also according to the invention, there is provided a method of producing porous titanate glass having a glass skeleton comprising titania and silica, in sheet or fiber form, said method comprising the steps of: mixing starting materials containing 15 to 34 mol % titanium oxide, 17 to 38 mol % silicic anhydride, 5 to 20 mol % aluminum oxide, 1 to 10 mol % boron oxide, 10 to 30 mol % calcium oxide, up to 10 ml % magnesium oxide, and optionally, up to 5 mol % of a metallic element oxide so that the composition of the mixture on the basis of mol % of the oxides is such that $(TiO_2 + SiO_2)/(Al_2O_3 + B_2O_3 + CaO + MgO)$ is 1.20 - 1.40, $TiO_2/SiO_2$ is 0.5 - 1.0, $B_2O_3/Al_2O_3$ is 1.0 - 0.6 and MgO/CaO is 0.21 - 0.06; heating and fusing the mixture; then quenching and shaping it to form a sheet of multi-component oxide glass, or spinning and quenching it to form fibers of said glass, which is composed of vitrified $TiO_2$ - $SiO_2$ - $Al_2O_3$ - $B_2O_3$ - CaO - MgO - $Y_mO_n$ (metallic element oxide when used); reheating said oxide glass in sheet or fiber form at a temperature of 600°C to 900°C, preferably 700°C to 850°C, and more preferably 750°C to 850°C, for a predetermined period of time to form an opaline or devitrified separate-phase glass; and then immersing said separate-phase glass in an acid solution to leach out and remove acid-soluble components, leaving a porous titanate glass having a $TiO_2/SiO_2$ weight ratio in the range of 0.8 to 1.7.

In the aforesaid methods of producing sheet and fibers of porous titanate glass, the ratios of $B_2O_3/Al_2O_3$ and MgO/CaO are preferably decreased as the ratio of $TiO_2/SiO_2$ is increased from 0.5 to 1.0.

Optionally, a part (about 0.5 mol %) of $SiO_2$ may be substituted for by metallic element oxide such as $MoO_3$, $SeO_3$, $Ni_2O_3$ or the like, e.g. 0.5 - 1 mol % thereof, so that the metallic element oxide is supported on the porous glass skeleton to reduce delaminating.

In the aforesaid methods of producing porous titanate glass in sheet or fibrous form, the mix of starting materials may comprise 18.0 - 28.0 mol % of titanium oxide, 38.0 - 28.0 mol % silicic anhydride, 10.0 - 12.5 mol % of aluminum oxide, 7.5 mol % of boron oxide, 21.0 - 22.5 mol % of calcium oxide, and 4.5 - 1.5 mol % magnesium oxide.

Suitable raw materials which may be used in this invention are as follows, although this invention is not limited to these materials:

The titanium oxide source may include oxides, hydroxides, alkoxides, and carbonate of titanium, and the like.

The silicic anhydride source may be include silica sol, fumed silica, silica gel, alkoxides of silicon, feldspar, volcanic ash and the like.

The aluminum oxide source may include aluminum alkoxides, pseudo-boehmite, alumina gibsite, sodium aluminate, alumino-phosphates and the like.

A boron oxide source may include boron oxide; boric acids such as ortho boric acid, meta boric acid, tetra boric acid; borax; borates such as lithium, sodium and potassium borates, metaborates and tetraborates e.g. of sodium; and the like.

A phosphoric acid source may be include calcium phosphates such as calcium hydrogenphosphate, magnesium phosphates, aluminum phosphates, alkali metal phosphates and the like.

The calcium oxide source may include calcium carbonate, calcium phosphates and the like.

The magnesium oxide source, alkali metal oxide source and metallic element oxide, when they are used in practising this invention, may include oxides, alkoxides, carbonates, nitrates, carboxylates, phosphates, aliminates and silicates of those metals and the like. The term «alkali metal» herein used is intended to include lithium, sodium, potassium and the like. The term «metallic element» is intended to include metals other than the metals specifically mentioned above, that is, titanium, calcium, magnesium and the like alkali metals. By way of example, they are metals in Groups IB, IIB, IIIB, IVB, VB, VIB, VIIB, IIÅ, IIIA, IVA, VA, the iron family and platinum group of the periodic Table of the Elements. Particularly suitable are cpper, silver, gold, zinc, cadmium, yttrium, germanium, tin, lead, zirconium, bismuth, vanadium, niobium, tantalum, chromium, molybdenum, tungsten, manganese, technetium, rhenium, ion, cobalt, nickel, ruthenium, rhodium, palladium, iridium, platinum, lanthanide, actinide and the like.

The pore size and specific surface area of porous titanate glass may be controlled by regulating the heat treating conditions for the phase separating step during the manufacturing process. In addition, the fused glass material according to this invention has such a low viscosity that it is easy to remove bubbles and produce a homogeneous glass in 30 to 60 minutes of fusion process at 1,400°C. Thus, the present invention is capable of producing a porous titanate glass in an energy-saving manner as compared with the production of conventional porous glass.

The invention will be explained in more detail in the following non-limitative description, which is given by way of example, taken in conjunction with the accompanying drawings, in which:

Fig. 1 is a block diagram illustrating the process of producing a porous titanate glass according to this invention;

Fig. 2 is a graph showing changes in the specific surface area due to the adjustements of the heat treatment temperature (phase separation temperature) for porous titanate glass according to this invention;

Fig. 3 is a graph showing changes in average pore radius due to adjustments of the heat treatment temperature (phase separation temperature) for porous titanate glass according to this invention;

Fig. 4 is a graph showing the results of thermogravimetric (TG) analysis and differential thermal analysis (DTA) conducted on the porous titanate glass according to this invention and on commercially available silica glass;

Fig. 5 is a graph showing the alkali resistance of the porous titanate glass according to this invention and of a commercially available silica glass;

Fig. 6 is a graph showing changes in the specific surface area due to adjustments of the heat treatment temperature (phase separation temperature) for another porous titanate glass according to this invention;

Fig. 7 is a graph showing changes in the average pore radius due to adjustments of the heat treatment temperature (phase separation temperature) for another porous titanate glass according to this invention;

Fig. 8 is a graph showing the changes in the distribution of pore sizes due to adjustments of the heat treatment temperature (phase separation temperature) for porous titanate glass of this invention; and

Fig. 9 is a graph showing the alkali resistances of another porous titanate glass according to this invention and of a commercially available silica glass.

*Example 1*

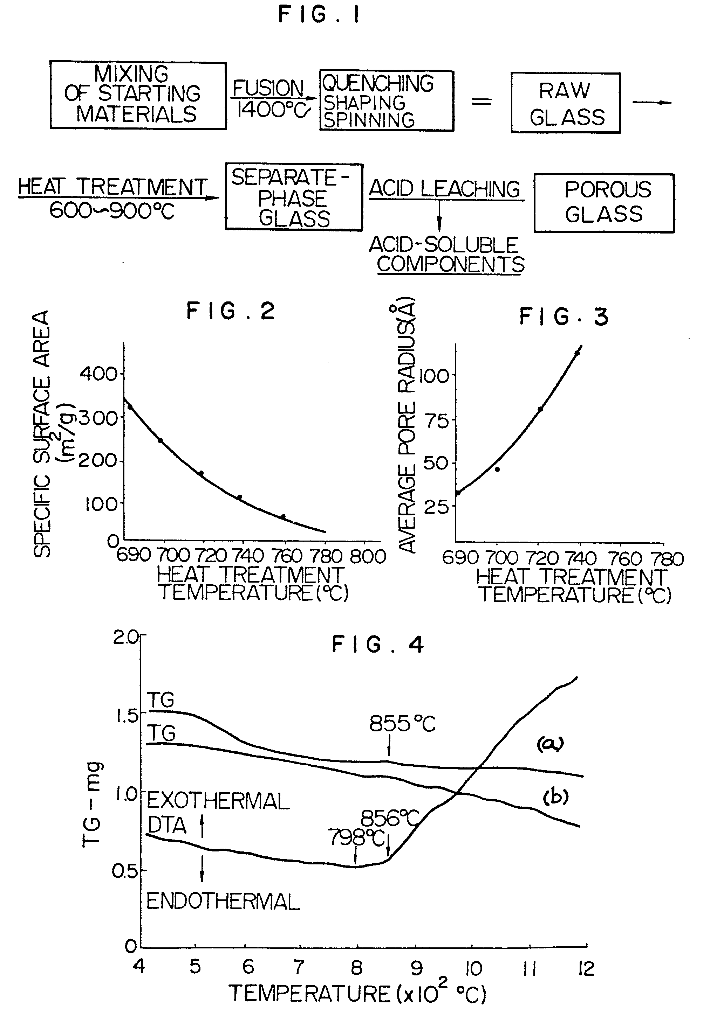

Fig. 1 illustrates successive steps of the present manufacturing process for porous titanate glass.

Starting materials containing 25.0 $TiO_2$ - 31.0 $SiO_2$ - 12.5 $Al_2O_3$ - 7.5 $B_2O_3$ - 24.0 CaO (mol composition) were thoroughly mixed together in a ball mill or the like. The mixture was then fused by heating in an electric furnace at 1400°C for 30 to 60 minutes, and quenched by placing it in a water bath, followed by shaping it to form a transparent raw glass. Subsequently, the raw glass was heated at a temperature of 600°C to 900°C for a predetermined period of time in the range of 5.0 to 100 hours, changing it from its transparent state to an opaline or devitrified state whereby a separate-phase glass was obtained. This separate-phase glass was immersed in a hydrochloric acid solution at 90°C for 1 to 2 hours to leach out and remove acid-soluble components, whereby a porous glass having a glasss skeleton of acid-insoluble $TiO_2$ and $SiO_2$ remaining therein was produced.

It was found that the thus produced porous titanate glass had a composition (weight %) of 37.5 $TioO_2$ - 46.0 $SiO_2$ - 14.3 $Al_2O_3$ - 2.17 CaO.

The composition analysis of the foregoing starting materails and porous titanate glass was carried out by X-ray fluorescence analysis.

As stated hereinabove, according to this invention it is possible to control the pore size and specific surface area by regulating the heat treatment conditions (heating temperature and time) for the phase separation step, as shown in Figs. 2 and 3.

Fig. 2 shows the changes in the specific surface area of porous titanate glass as the heat treatment conditions for the phase separation are varied when producing a porous titanate glass using the raw material composition as described above. Fig. 3 shows the changes in the average pore radius of porous titanate glass as the heat treatment conditions for the phase separation are varied when producing a porous titanate glass using the same material composition as for Fig. 2. The heat treating time was twelve hours for either case. The average pore radius was measured using a soaped mat.

As is seen from Figs. 2 and 3, as the heat treatment temperature rises, the specific surface area decreases whereas the pore radius increases. It is thus possible to produce a porous titanate glass having any desired pore structure with a specific surface area ranging from 500 $m^2/g$ to 10 $m^2/g$ and a pore radius ranging from 20 Å to 500 Å (2 to 50 nm) by changing the heat treatment temperature and heating time.

The heat resistance and chemical resistance characteristics of the porous titanate glass produced by the method of this invention will be discussed below.

Fig. 4 show the changes in weight (heat resistance characteristics) versus changes in temperature for porous titanate glass produced according to the present invention. The curve (a) in the graph represents the porous titanate glass while the curve (b) represents a commercially available high silica glass.

The curves indicate the results of thermogravimetric (TG) analysis and differential thermal analysis (DTA) in which samples each weighing 80 mg were used. The samples were heated to 400°C in a DTA furnace and then cooled down, followed by measuring the samples at a heating-up rate of 5°C/min and with DTA sensitivity of ± 25 μV.

The commercially available high silica glass, which had been subjected to a heat treatment at a temperature of about 600°C exhibited no noticeable change in weight at temperatures between 500°C and 600°C, but showed a higher rate of weight change at temperatures exceeding 700°C. On the other hand, the porous titanate glass exhibited less changes in weight at temperatures between 650°C and 855°C, which showed that it maintained a more stable pore structure within this range of temperature than the conventional porous glass composed mainly of silica.

The DTA curve shows transition points at 798°C and 856°C, the latter of which is the temperature at which sintering begins to occur at the surface of glass. In view of the changes in TG it is believed that the OH's of Ti-OH and Si-OH will be lost at this temperature of 856°C.

As indicated above, it is to be appreciated that the porous titanate glass produced according to this invention has a high heat resistance as well as a high chemical reactivity as the Ti-OH and Si-OH groups are retained until a higher temperature is reached.

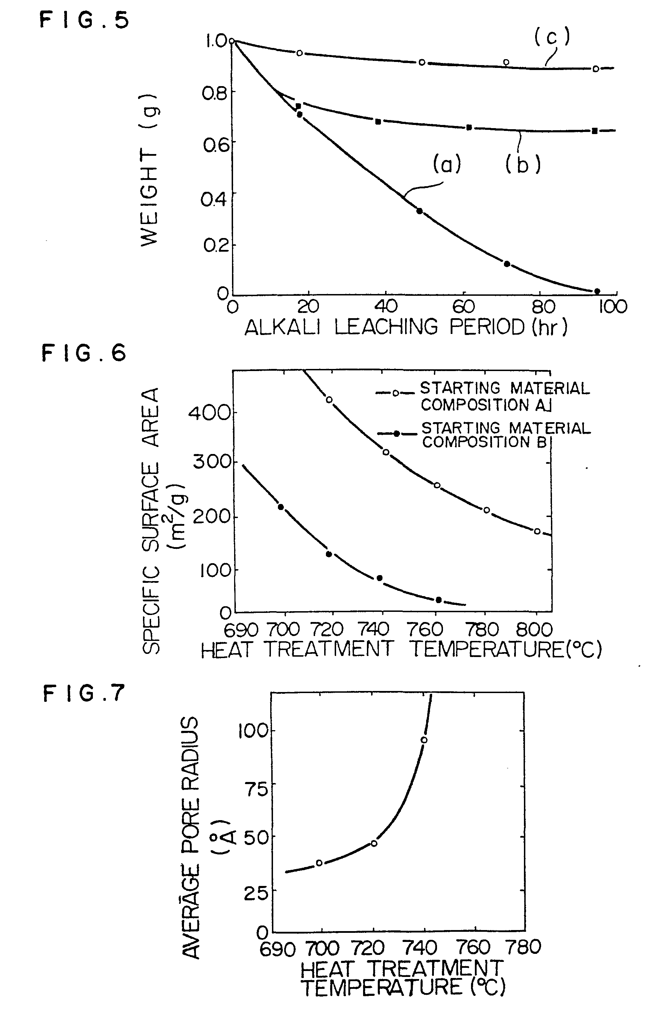

Fig. 5 shows the chemical resistance (alkali resistance) of the porous titanate glass. To analyze the chemical resistance, 1 g of porous titanate glass was placed on a glass fliter and immersed in a 1/4 normal NaOH solution kept at 40°C to measure the weight changes with time. The ordinate represents the weight of the porous titanate glass which remained on the filter while the abscissa represents the immersion time.

The curve (a) represents a commercially available porous silica glass while the curve (b) represents a porous titanate glass according to this invention which was produced through a phase separation process at 720°C for 12 hours, followed by annealing (strengthening) at 400°C for 12 hours. The curve (c) represents another porous titanate glass which was subjected to the same phase separation process but annealed (or subjected to strengthening treatment) at 700°C for 12 hours.

As is seen from the graph of Fig. 5, the commercially available porous silica glass (a) was completely dissolved after 100 hours of alkali leaching, whereas the porous titanate glass according to this invention provides a higher chemical resistance than the conventional porous silica glass in that 60% and 80% of the porous titanate glasses (b) and (c) which were subjected to annealing (strengthening treatment) at 400°C and 700°C, respectively remained undissolved after 100 hours of alkali leaching .

*Example 2*

Porous glasses were produced in the same manner as described with respect to Example 1, using the starting materials (A) (Sample 2) and (B) (Sample 3) indicated in the left columns of Table 1 below. The compositions (weight %) of the resulting porous titanate glasses were shown in the right columns of Table 1.

TABLE 1

| Components | Staring material composition (mol %) | | Porous glass composition (wt %) | |
|---|---|---|---|---|
| | Sample 2 (A) | Sample 3 (B) | Sample 2 (A) | Sample 3 (B) |
| $TiO_2$ | 17.0 | 26.0 | 46.3 | 58.8 |
| $SiO_2$ | 34.0 | 26.0 | 57.8 | 44.7 |
| $Al_2O_3$ | 13.0 | 10.0 | 0.1 | 0.4 |
| $B_2O_3$ | 7.0 | 5.0 | 0 | 0 |
| CaO | 24.0 | 28.0 | 0 | 0 |
| MgO | 5.0 | 5.0 | 0 | 0 |
| Total | 100.0 | 100.0 | 104.0 | 103.9 |

\* Methods of analysis: gravimetric analysis for $SiO_2$; colorimetry for $TiO_2$; fluorometry for $Al_2O_3$; BF ion electrode method for $B_2O_3$; atomic-absorption spectroscopy for CaO, MgO.

As is seen from Table 1, the glass composition ratio (wt %) of titania to silica $TiO_2/SiO_2$ is 0.8 for Sample 2 and 1.3 for Sample 3.

In both Sample 2 and 3, as in Example 1, it was possible to control the pore size and specific surface area by adjusting the heat treatment conditions (heating temperature and time) as shown in Figs. 6 and 7. The heat treatment conditions and method of measurement were the same as with Example 1.

As is seen from Figs. 6 and 7, as the heat treatment temperature rises, the specific surface area decreases whereas the pore radius increases. It is thus possible to produce a porous titanate glass having any desired pore structure with a specific surface area ranging from 500 m²/g to 10 m²/g and a pore radius ranging from 20 Å to 500 Å (2 to 50 nm) by changing the heat treatment temperature (phase separation temperature) and heating time.

*Example 3*

One of the features of the present invention is to add a metallic element oxide such as $MoO_3$, $SeO_3$ or $Fe_2O_3$ to the starting material composition and have such metallic element oxide supported on a glass skeleton. In conventional porous glass produced from oxide glass, most of any metallic element oxide incorporated in the starting materials is leached out by the acid treatment with only a trace amount thereof remaining. In contrast, according to the present invention, the metallic element oxide added to the starting material composition is not completely removed during the acid leaching treatment but remains supported on the skeleton of porous titanate glass.

By way of example, $MoO_3$ was used as a metallic element oxide, and a porous titanate glass was produced from the starting material composition of $26.0\ TiO_2$ - $25.0\ SiO_2$ - $16.0\ Al_2O_3$ - $5.0\ B_2O_3$ - $24.5\ CaO$ - $2.5\ Na_2O$ - $1.0\ MoO_3$ (on a mol % basis). The chemical composition of the resulting porous titanate glass was as shown in Table 2 below, and the composition ratio (wt. %) of titania to silica was 1.7.

TABLE 2

| Oxides | $TiO_2$ | $SiO_2$ | $Al_2O_3$ | $B_2O_3$ | CaO | $Na_2O$ | $MoO_3$ | Total |
|---|---|---|---|---|---|---|---|---|
| wt. % | 63.8 | 38.6 | 0.2 | 0 | 0 | 0.1 | 1.2 | 103.9 |

It was confirmed from Table 2 that the added $MoO_3$ was contained in the porous titanate glass product. It is an important advantage in using the porous glass as a catalyst that such metallic element oxide can be supported on the porous carrier. It has also been found that the composition amounts of $Al_2O_3$ and $Na_2O$ would vary depending upon the phase separation and acid treatment conditions.

*Example 4*

As shown in Table 3 listed below, while according to the present invention, porous titanate glass may be produced fundamentally from a six-component system comprising $TiO_2$ - $SiO_2$ - $Al_2O_3$ - $B_2O_3$ - $CaO$ - $Na_2O$ (Samples 4-6), an equimolar amount of $Li_2O$ may be used in place of $Na_2O$ (Sample 7). Alternatively, if 5.9 or more mol % of MgO is added, such porous titanate glass may be produced even from a composition of non-alkali metal oxides (Sample 8).

The added metallic element oxides (Samples 9-12 and 15) have the effect of reducing the cracking of the glass and enlarging the phase separation region of the glass. The amount of such metallic element oxides remaining in the porous titanate glass product vary depending on the heat treatment conditions and metallic elements used.

The amount of $TiO_2$ in the starting materials may be increased to such an extent that the molar ratio of $SiO_2$ to $TiO_2$ becomes about 0.4. Howerer, if the ratio of $SiO_2/TiO_2$ is 1.0 or below, it is difficult to completely vitrify the composition due to crystallization when the method of quenching the melt by depositing it in a water bath is utilized for the quenching step. With the $SiO_2/TiO_2$ ratio in the range from 1.0 to 2.0, the composition may be easily vitrified to obtain glass in the form of particles, sheet or hollow fiber.

TABLE 3

| Sample | Starting material composition (mol %) | | | | | | | | |
|---|---|---|---|---|---|---|---|---|---|
| | $TiO_2$ | $SiO_2$ | $Al_2O_3$ | $B_2O_3$ | CaO | MgO | $Na_2O$ | $Li_2O$ | Metallic Element Oxides |
| 4 | 34.0 | 17.0 | 16.0 | 5.0 | 25.5 | — | 2.5 | — | — |
| 5 | 32.0 | 20.0 | 16.6 | 5.0 | 25.0 | — | 2.0 | — | — |
| 6 | 26.0 | 26.0 | 16.0 | 5.0 | 24.5 | — | 2.5 | — | — |
| 7 | 26.0 | 26.0 | 16.0 | 5.0 | 24.5 | — | — | 2.5 | — |
| 8 | 26.0 | 26.0 | 10.0 | 5.0 | 28.0 | 5.0 | — | — | — |
| 9 | 26.0 | 25.0 | 16.0 | 5.0 | 24.5 | — | 2.5 | — | 1.0 ($MoO_3$) |
| 10 | 26.0 | 25.0 | 16.0 | 5.0 | 24.5 | — | — | 2.5 | 1.0 ($MoO_3$) |
| 11 | 26.0 | 25.0 | 16.0 | 5.0 | 24.5 | — | 2.5 | — | 1.0 ($SeO_3$) |

TABLE 3 (Continued)

| Sample | Starting material composition (mol %) | | | | | | | | |
|---|---|---|---|---|---|---|---|---|---|
| | TiO$_2$ | SiO$_2$ | Al$_2$O$_3$ | B$_2$O$_3$ | CaO | MgO | Na$_2$O | Li$_2$O | Metallic Element Oxides |
| 12 | 26.0 | 25.0 | 16.0 | 5.0 | 24.5 | — | 2.5 | — | 1.0 (Fe$_2$O$_3$) |
| 13 | 17.0 | 34.0 | 16.0 | 5.0 | 25.0 | — | 2.5 | — | — |
| 14 | 17.0 | 34.0 | 13.0 | 7.0 | 24.0 | 5.0 | — | — | — |
| 15 | 17.0 | 34.0 | 12.0 | 7.0 | 24.0 | 5.0 | — | — | 1.0 (MoO$_3$) |
| 16 | 17.0 | 34.0 | 13.0 | 5.0 | 24.5 | 5.0 | 2.5 | — | — |
| Control | | | | | | | | | |
| 1 | 10.0 | 42.0 | 16.0 | 5.0 | 24.5 | — | 2.5 | — | — |
| 2 | 7.5 | 44.5 | 16.0 | 5.0 | 24.5 | — | 2.5 | — | — |
| 3 | 5.0 | 47.0 | 16.0 | 5.0 | 24.5 | — | 2.5 | — | — |

With the starting material compositions shown as Controls 1 and 2, an opaline separate-phase glass was obtained by the heat treatment, but it was completely dissolved by the acid treatment so that no porous glass was produced. With the starting material compostion shown as Control 3, it did not produce any opaline separate-phase glass so that no porous glass could be obtained.

The pore distribution, heat resistance and chemical resistance of porous titanate glasses produced form the starting material compositions shown in the aforesaid examples will be discussed below.

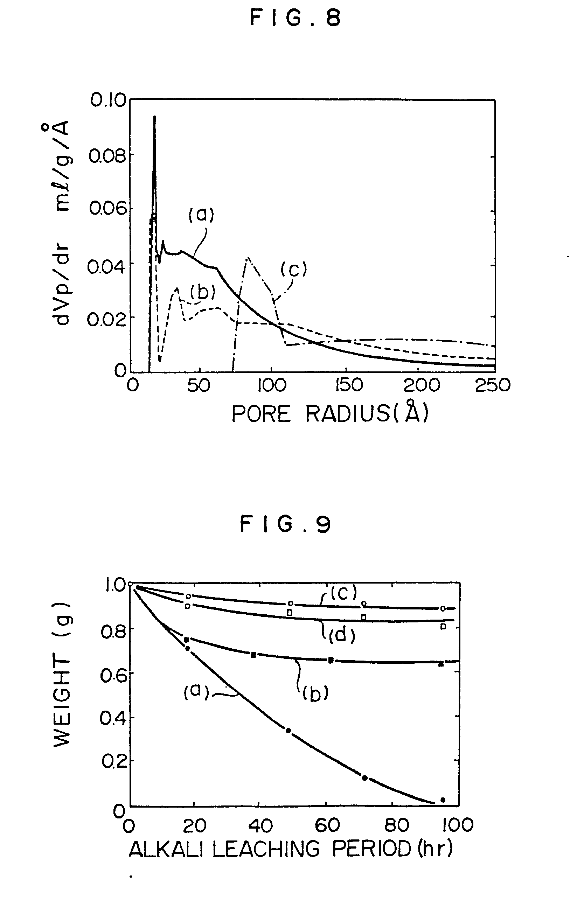

Fig. 8 shows the pore distributions of the porous titanate glass of the Sample 8 (same as the Sample 3 shown in Table 1) as measured using a soaped mat manufactured by Carlo Elba Corp., Italy. The solid line curve (a), broken line curve (b) and chain line curve (c) show the pore distributions for the glasses produced under different heat treatment conditions for the phase separation. Specifically, the heat treatment conditions were 700°C and 15 hours for the glass (a); 720°C and 15 hours for the glass (b); and 740°C and 15 hours for the glass (c). With the heat treatment (a) at 700°C for 15 hours, there are a considerable number of pores having a radius on the order of 20 Å, (2 nm), whereas with the heat treatment (c) at 740°C for 15 hours, there are pores of radius 80 Å (8 nm) and 150 to 250 Å (15 to 25 nm), but no pores having a radius on the order of 20 Å (2 nm). It is to be understood that the pore size increases with a rise in the heat treatment temperature.

Upon analyzing the weight changes versus temperature changes, namely the heat resistance of the porous titanate glass produced from the starting material composition shown in the Sample 7, the same results as those shown in Fig. 4 were obtained. It was thus seen that the porous titanate glass produced according to this invention had a higher heat resistance and a more stable pore structure than the conventional porous glass composed mainly of silica as well as having a high chemical reactivity as the Ti-OH and Si-OH groups were retained until a higher temperature was reached.

Fig. 9 shows the chemical resistance (alkali resistance) of the porous titanate glass. These results were obtained by placing 1 g of porous titanate glass on a glass filter and immersing it in a 1/4 normal NaOH solution kept at 40°C to measure the weight changes with time. The ordinate of the graph represents the weight of the porous titanate glass which remained on the filter while the abscissa represents the immersion time.

The curve (a) represents a commercially available porous silica glass while the curve (b) represents a porous titanate glass which was produced by subjecting the fused glass of the Sample 6 to phase separation treatment at 720°C for 12 hours. The glass was annealed or subjected to strengthening process at 400°C for 12 hours. The curve (c) represents the porous titanate glass which is the same as that of (b) but which was annealed or subjected to strengthening treatment at 700°C for 12 hours. The curve (d) represents a porous titanate glass which was produced from the starting material composition shown in Sample 7 and which was annealed or subjected to strengthening treatment at 700°C for 12 hours.

As is seen from the graph of Fig. 9, the commercially available porous silica glass (a) was completely dissolved after 100 hours of alkali leaching, whereas the porous titanate glass acording to this invention provides a higher chemical resistance than the conventional porous silica glass in that 60% to 80% of the porous titanate glasses (b), (c) and (d) which were subjected to annealing or strengthening treatment at 400°C and 700°C, respectively remained undissolved after 100 hours of alkali leaching.

The preferred material compositions for producing a sheet and fibers of porous titanate glass according to the present invention, and such material compositions having metallic element oxide added thereto are shown in Tables 4 and 5, respectively.

With the materials in the range of composition as shown, the fusing step is facilitated, crystallization is very unlikely to occur during the quench-vitrification step, cracking and delaminating are minimized during the acid treating step, and it is possible to manufacture a homogeneous quality of porous titanate glass in sheet form in a short time.

TABLE 4

| Material | TiO$_2$ | SiO$_2$ | Al$_2$O$_3$ | B$_2$O$_3$ | CaO | MgO |
|---|---|---|---|---|---|---|
| 1 | 18.0 | 38.0 | 10.0 | 7.5 | 21.0 | 4.5 |
| 2 | 21.0 | 35.0 | 12.5 | 7.5 | 21.5 | 2.5 |
| 3 | 23.0 | 33.0 | 12.5 | 7.5 | 21.5 | 2.5 |
| 4 | 25.0 | 31.0 | 12.5 | 7.5 | 22.5 | 1.5 |
| 5 | 28.0 | 28.0 | 12.5 | 7.5 | 22.5 | 1.5 |

TABLE 5

| Materials | TiO$_2$ | SiO$_2$ | Al$_2$O$_3$ | B$_2$O$_3$ | CaO | MgO | Metallic element oxides |
|---|---|---|---|---|---|---|---|
| 6 | 25.0 | 30.5 | 12.5 | 7.5 | 22.5 | 1.5 | 0.5 (MoO$_3$) |
| 7 | 25.0 | 30.5 | 12.5 | 7.5 | 22.5 | 1.5 | 0.5 (SeO$_2$) |
| 8 | 25.0 | 30.5 | 12.5 | 7.5 | 22.5 | 1.5 | 0.5 (Ni$_2$O$_3$) |
| 9 | 25.5 | 30.5 | 12.5 | 7.5 | 21.5 | 1.5 | 1.0 (Ni$_2$O$_3$) |
| 10 | 25.5 | 30.5 | 12.5 | 7.5 | 21.5 | 1.5 | 1.0 (MoO$_3$) |

*Example 5*

This example is illustrative of the method of producing a sheet of porous titanate glass according to the present invention.

Starting materials used were of the composition (4 in Table 4) which comprised 25.0 TiO$_2$, 31.0 SiO$_2$, 12.5 Al$_2$O$_3$, 7.5 B$_2$O$_3$, 22.5 CaO, and 1.5 MgO (mol composition). These materials were thoroughly mixed together in a ball mill or the like. The mixture was then fused by heating in an electric furnace at 1,400°C for 30 to 60 minutes, quenched by placing it in a water bath, and shaped (rolled) to form a transparent sheet of glass. Then, as the sheet of glass was heated at a temperature of 600°C to 900°C, preferably 700°C to 850°C, more preferably 750°C to 800°C for a predetermined period of time in the range of 4 to 12 hours, the glass was changed from its transparent state to an opaline or devitrified state whereby a separate-phase glass in sheet form was obtained. This separate-phase glass was immersed in a hydrochloric acid solution of 0.5 N - 1.0 N at 90°C for 1 to 12 hours to leach out and remove acid-soluble components, whereby a sheet of porous glass with a glass skeleton of acid-insoluble TiO$_2$ and SiO$_2$ remaining was produced. The porous glass was dried in a vacuum at 110°C, and was then annealed or subjected to strengthening treatment at 700°C as required.

It was found that the thus produced porous titanate glass had a composition (weight %) of 37.5 TiO$_2$ - 46.0 SiO$_2$ - 14.3 Al$_2$O$_3$ - 2.17 CaO.

The composition analysis of the foregoing starting materials and porous titanate glass was carried out by X-ray fluorescence analysis.

*Example 6*

This example is illustrative of the method of producing porous titanate glass in fibrous form according to the present invention.

Starting materials used were of the composition (4 in Table 4) which comprised 25.0 TiO$_2$, 31.0 SiO$_2$, 12.5 Al$_2$O$_3$, 7.5 B$_2$O$_3$, 22.5 CaO, and 1.5 MgO (mol composition). These materials were thoroughly mixed together in a ball mill or the like. The mixture was fused by heating in an electric furnace at 1,400°C for 30 to 60 minutes.

The thus fused mixture was spun by a conventional solution spinning process and quenched to form transparent glass in fibrous form.

Then, as the transparent glass in fibrous form was heated at a temperature of 600°C to 900°C, preferably 700°C to 850°C, more preferably 750°C to 800°C for a predetermined period of time in the range of 4 to 12 hours, the glass was changed from its transparent state to an opaline or devitrified state whereby a separate-phase glass in fibrous form was obtained. This separate-phase glass was immersed in a hydrochloric acid solution of 0.5 N - 1.0 N at 90°C for 1 to 12 hours to leach out and remove solid-soluble components, whereby porous glass fibers with a glass skeleton of acid-insoluble TiO$_2$ and SiO$_2$ remaining was produced. Subsequently, the porous glass fibers were immersed in a titanium tetra-hydroxide (Ti(OH)$_4$) solution and then dried in a vacuum at 110°C, followed by annealing or strengthening treatment at 700°C as required. This immersion treatment in titanium tetrahydroxide (Ti(OH)$_4$) solution may be omitted. Titanium tetra-chloride (TiCl$_4$) or Titanium alkoxide (Ti(O-R)$_4$ wherein R is alkyl group) may be used in substitution for titanium tetrahydride (Ti(OH)$_4$).

It was found that the thus produced porous titanate glass fibers had a composition (weight %) of 37.5 TiO$_2$ - 46.0 SiO$_2$ - 14.3 Al$_2$O$_3$ - 2.17 CaO.

The composition analysis of the foregoing starting materials and porous titanate glass was carried out by X-ray florescence analysis.

It is to be understood that the spinning process in producing porous titanate glass in fibrous form is not limited to the solution spinning method as described above but may be carried out any suitable method.

While the diameter of glass fibers produced may vary depending upon the spinning method employed, short fibers on the order of 0.5 mm in length may generally have a diameter of less than several 5 μm, and long fibers may have a diameter greater than 15 Å (1.5 nm).

The foregoing porous glass has s glass skeleton comprising titania and silica and exhibits high heat resistance and chemical resistance (alkali resistance) as well as high chemical reactivity. The porous titanate glass is suitable for use inter alia as an adosrbent, catalyst, catalyst support, gas sensor, ultrafiltration medium, reaction separating membrane, and carrier for immobiized enzymes.

**Claims**

1. A method of producing a porous titanate glass having a glass skeleton comprising titania and silica, the method comprising the steps of: mixing starting material contaninig 15 to 34 mol % titanium oxide, 17 to 38 mol % silicic anhydride, 5 to 20 mol % aluminum oxide, 1 to 10 mol % boron oxide, and 10 to 30 mol % calcium oxide; heating and fusing the mixture, then quenching it to form a multi-component oxide glass composed of vitrified TiO$_2$ - SiO$_2$ - Al$_2$O$_3$ - B$_2$O$_3$ - CaO; reheating the said oxide glass at a temperature of 600°C to 900°C for a predetermined period of time to form an opaline or devitrified separate-phase glass; and immersing the separate-phase glass in an acid solution to leach out and remove acid-soluble components, leaving a porous titanate glass having a TiO$_2$/SiO$_2$ weight ratio in the range of 0.8 to 1.7.

2. The metod of claim 1, wherein said starting materials contain about 25.0 mol % of titanium oxide, 31.0 mol % of silicic anhydride, 12.5 mol % of aluminum oxide, 7.5 mol % of boron oxide, and 24.0 mol % of calcium oxide.

3. A method according to claim 1 or claim 2, wherein the starting materials contain the aforesaid oxides as principal components and at least one accessory component selected from magnesium oxide, alkali metal oxide and metallic element oxide so as to form, after heating fusing and quenching, a multi-component oxide glass composed of vitrified TiO$_2$ - SiO$_2$ - Al$_2$O$_3$ - B$_2$O$_3$ - CaO - MgO and/or X$_2$O and/or Y$_m$O$_n$ (wherein X$_2$O is alkali metal oxide and Y$_m$O$_n$ is metallic element oxide).

4. The metod according to claim 3, wherein the starting materials contain 10 or less mol % of magnesium oxide, 5 or less mol % of alkali metal oxide, and 5 or less mol % of metallic element oxide, the molar ratio of silicic anhydride to titanic oxide (SiO$_2$/TiO$_2$) in the starting materials for example being 0.4 to 2.0.

5. A metod of producing porous titanate glass having a glass skeleton comprising titania and silica, in sheet or fiber form, said method comprising the steps of: mixing starting materials containing 15 to 34 mol % titanium oxide, 17 to 38 mol % silicic anhydride, 5 to 20 mol % aluminum oxide, 1 to 10 mol % boron oxide, 10 to 30 mol % calcium oxide, up to 10 mol % magnesium oxide, optionally, up to 5 mol % of a metallic element oxide so that the composition of the mixture on the basis of mol % of the oxides is such that (TiO$_2$ + SiO$_2$)/(Al$_2$O$_3$ + B$_2$O$_3$ + CaO + MgO) is 1.20 - 1.40, TiO$_2$/SiO$_2$ is 0.5 - 1.0, B$_2$O$_3$/Al$_2$O$_3$ is 1.0 - 1.6 and MgO/CaO is 0.21 - 0.06; heating and fusing the mixture; then quenching and shaping it to form a sheet of multicomponent oxide glass, or spinning and quenching it to form fibers of said glass, which is composed of vitrified TiO$_2$ - SiO$_2$ - Al$_2$O$_3$ - B$_2$O$_3$ - CaO - MgO - Y$_m$O$_n$ (metallic element oxide when used); reheating said oxide glass in sheet or fiber form at a temperature of 600°C to 900°C, preferably 700°C to 850°C, and more preferably 750°C to 850°C, for a predetermined period of time to form an opaline or devitrified separate-phase glass; and then immersing said separate-phase glass in an acid solution to leach out and remove acid-soluble components, leaving a porous titanate glass having a TiO$_2$/SiO$_2$ weight ratio in the range of 0.8 to 1.7.

6. The method according to claim 3, 4 or 5, wherein said starting materials contain 18.0 to 28.0 mol % of titanium oxide, 38.0 to 28.0 mol % of silicic anhydride, 10.0 to 12.5 mol % of aluminum oxide, 7,5 mol % of boron oxide, 21.0 to 22.5 mol % of calcium oxide and 4.5 to 1.5 mol % of magnesium oxide.

7. The method according to claim 5 or claim 6, wherein said metallic element oxide, when used, is 0.5 to 1.0 mol % of $MoO_3$, $SeO_3$ or $Ni_2O_3$.

## Patentansprüche

1. Verfahren zur Herstellung eines porösen Titanatglases mit einer Glasgrundstruktur aus Titandioxid und Siliziumdioxid, wobei das Verfahren die Schritte umfasst, dass Ausgangsmaterialien, die 15 bis 34 Mol-% Titanoxid, 17 bis 38 Mol-% siliziumhaltiges Anhydrid, 5 bis 20 Mol-% Aluminiumoxid, 1 bis 10 Mol-% Boroxid und 10 bis 30 Mol-% Kalziumoxid enthalten, gemischt werden, das Gemisch erwärmt und geschmolzen und sodann zur Bildung eines Mehrkomponenten-Oxidglases aus verglastem $TiO_2$ - $SiO_2$ - $Al_2O_3$ - $B_2O_3$ - CaO abgekühlt wird, das Oxidglas bei einer Temperatur von 600°C bis 900°C über einen vorbestimmten Zeitraum zur Bildung eines eingetrübten oder entglasten Trennphasenglases wieder erwärmt wird und das Trennphasenglas in eine Säurelösung zum Herauslösen und Entfernen säurelöslicher Bestandteile getaucht wird, wobei ein poröses Titanatglas mit einem $TiO_2/SiO_2$-Gewichtsverhältnis im Bereich von 0,8 zu 1,7 zurückbleibt.

2. Verfahren nach Anspruch 1, bei dem, die Ausgangsmaterialien etwa 25,0 Mol-% Titanoxid, 31,0 Mol-% siliziumhaltiges Anhydrid, 12,5 Mol-% Aluminiumoxid, 7,5 Mol-% Boroxid und 24,0 Mol-% Kalziumoxid enthalten.

3. Verfahren nach Anspruch 1 oder Anspruch 2, bei dem die Ausgangsmaterialien die vorgenannten Oxide als Hauptbestandteile und zumindest einen Zusatzbestandteil enthalten, der aus Magnesiumoxid, Alkalimetalloxid und dem Oxid eines metallischen Elements ausgewählt wird, um nach dem Erwärmen, Schmelzen und Abkühlen ein Mehrkomponentenoxidglas aus verglastem $TiO_2$ - $SiO_2$ - $Al_2O_3$ - $B_2O_3$ - CaO - MgO und/oder $X_2O$ und/oder $Y_mO_n$ (wobei $X_2O$ das Alkalimetalloxid und $Y_mO_n$ das Oxid des metallischen Elements ist) zu bilden.

4. Verfahren nach Anspruch 3, bei dem die Ausgangsmaterialien 10 oder weniger Mol-% Magnesiumoxid, 5 oder weniger Mol-% Alkalimetalloxid und 5 oder weniger Mol-% des Oxids eines metallischen Elements enthalten, wobei das Molverhältnis von siliziumhaltigem Anhydrid zu Titanoxid ($SiO_2/TiO_2$) in den Ausagangsmaterialien zum Beispiel 0,4 zu 2,0 beträgt.

5. Verfahren zur Herstellung eines porösen Titanatglases mit einer Glasgrundstruktur aus Titandioxid und Siliziumdioxid in Flachmaterial- oder Faserform, wobei das Verfahren die Schritte umfasst, dass Ausgangsmaterialien, die 15 bis 34 Mol-% Titanoxid, 17 bis 38 Mol-% siliziumhaltiges Anhydrid, 5 bis 20 Mol-% Aluminiumoxid, 1 bis 10 Mol-% Boroxid, 10 bis 30 Mol-% Kalziumoxid, bis zu 10 Mol-% Magnesiumoxid und wahlweise bis zu 5 Mol-% eines Oxids eines metallischen Elements enthalten, gemischt werden, so dass die Zusammensetzung des Gemisches auf der Basis von Mol-% der Oxide derart ist, dass $(TiO_2 + SiO_2)/(Al_2O_3 + B_2O_3 + CaO + MgO)$ 1,20 - 1,40, $TiO_2/SiO_2$ 0,5 - 1,0, $B_2O_3/Al_2O_3$ 1,0 - 0,6 und MgO/CaO 0,21 - 0,06 beträgt, das Gemisch erwärmt und geschmolzen, sodann zur Bildung eines Flachmaterials aus Mehrkomponenten-Oxidglas abgekühlt und geformt oder gesponnen und abgekühlt wird, um Fasern aus diesem Glas zu bilden, das aus verglastem $TiO_2$ - $SiO_2$ - $Al_2O_3$ - $B_2O_3$ - CaO - MgO - $Y_mO_n$ (gegebenenfalls verwendetes Oxid eines metallischen Elements) zusammengesetzt ist, das Oxidglas in Flachmaterial- oder Faserform bei einer Temperatur von 600°C bis 900°C, vorzugsweise 700°C bis 850°C und insbesondere 750°C bis 850°C, über einen vorbestimmten Zeitraum zur Bildung eines eingetrübten oder entglasten Trennphasenglases wieder erwärmt wird und sodann das Trennphasenglas in eine Säurelösung zum Herauslösen und Entfernen säurelöslicher Bestandteile getaucht wird, wobei ein poröses Titanglas mit einem $TiO_2/SiO_2$- Gewichtsverhältnis im Bereich von 0,8 zu 1,7 zurückbleibt.

6. Verfahren nach Anspruch 3, 4 oder 5, bei dem die Ausgangsmaterialien 18,0 bis 28,0 Mol-% Titanoxid, 38,0 bis 28,0 Mol-% siliziumhaltiges Anhydrid, 10,0 bis 12,5 Mol-% Aluminiumoxid, 7,5 Mol-% Boroxid, 21,0 bis 22,5 Mol-% Kalziumoxid und 4,5 bis 1,5 Mol-% Magnesiumoxid enthalten.

7. Verfahren nach Anspruch 5 oder Anspruch 6, bei dem das gegebenenfalls verwendete Oxid eines metallischen Elements 0,5 bis 1,0 Mol-% $MoO_3$, $SeO_3$ oder $Ni_2O_3$ ist.

## Revendications

1. Procédé de production d'un verre de titanate poreux comportant un squelette de verre qui comprend de l'anhydride titanique et de l'anhydride silicique, ce procédé comprenant les opérations successives consistant à mélanger des produits de départ contenant 15 à 34 mol % d'anhydride borique et 10 à 30 mol % d'oxyde de calcium; à chauffer et à fondre le mélange, puis à le refroidir brusquement pour former un verre d'oxydes à plusieurs constituants composé de $TiO_2$ - $SiO_2$ - $Al_2O_2$ - $B_2O_3$ - CaO vitrifiés; à chauffer de nouveau ce verre d'oxydes à une température de 600°C à 900°C pendant une période de temps prédéterminée pour former un verre opale ou dévitrifié à phases séparées; et à immerger le verre à phases séparées dans une solution d'acide pour extraire par lixiviation et éliminer les composants solubles dans l'acide, ce qui laisse un verre de titanate poreux ayant un rapport $TiO_2/SiO_2$ en poids dans la gamme de 0,8 à 1,7.

2. Procédé selon la revendication 1, dans lequel lesdits produits de départ contiennent environ 25,0 mol % d'anhydride titanique, 31,0 mol % d'anhydride silicique, 12,5 mol % d'oxyde d'aluminium, 7,5 mol % d'anhydride borique et 24,0 mol % d'oxyde de calcium.

3. Procédé selon la revendication 1 ou 2, dans lequel les produits de départ contiennent les oxydes précités en tant que constituants principaux et au moins un constituant auxiliaire choisi parmi l'oxyde de magnésium, des oxydes de métaux alcalins et des oxydes d'éléments métalliques, de manière à former, après la fusion par chauffage et le refroidissement brusque, un verre d'oxydes a plusieurs constituants composé de $TiO_2$ - $SiO_2$ - $Al_2O_3$ - $B_2O_3$ - CaO - MgO et/ou $X_2O$ et/ou $Y_mO_n$ vitrifiés ($X_2O$ étant un oxyde de métal alcalin et $Y_mO_n$ étant un oxyde d'élément métallique).

4. Procédé selon la revendication 3, dans lequel les produits de départ contiennent 10 mol % ou moins d'oxyde de magnésium, 5 mol % ou moins d'oxyde de métal alcalin et 5 mol % ou moins d'oxyde d'élément métallique, le rapport molaire de l'anhydride silicique à l'anhydride titanique ($SiO_2/TiO_2$) dans les produits de départ étant par exemple compris entre 0,4 et 2,0.

5. Procédé de production, sous forme de feuille ou de fibres, d'un verre de titanate poreux comportant un squelette de verre qui comprend de l'anhydride titanique et de l'anhydride silicique, ce procédé comprenant les opérations successives consistant à mélanger des produits de départ contenant 15 à 34 mol % d'anhydride titanique, 17 à 38 mol % d'anhydride silicique, 5 à 20 mol % d'oxyde d'aluminium, 1 à 10 mol % d'anhydride borique, 10 à 30 mol % d'oxyde de calcium, jusqu'à 10 mol % d'oxyde de magnésium et, éventuellement, jusqu'à 5 mol % d'un oxyde d'élément métallique, de telle manière que la composition du mélange, exprimée en mol % des oxydes, soit telle que ($TiO_2$ + $SiO_2$)/($Al_2O_3$ + $B_2O_3$ + CaO + MgO) = 1,20 à 1,40, $TiO_2/SiO_2$ = 0,5 - 1,0, $B_2O_3/Al_2O_3$ = 1,0 - 0,6 et MgO/CaO = 0,21 - 0,06; à chauffer et à fondre le mélange; puis à le refroidir brusquement et à le façonner pour former une feuille de verre d'oxydes à plusieurs constituants, ou à le filer et à le refroidir brusquement pour former des fibres de ce verre qui est composé de $TiO_2$ - $SiO_2$ - $Al_2O_3$ - $B_2O_3$ - CaO - MgO - $Y_mO_n$ (oxyde d'élément métallique utilisé) vitrifiés; à chauffer de nouveau ce verre d'oxydes sous forme de feuille ou de fibres à une température de 600°C à 900°C, de préférence de 700°C à 850°C et notamment de 750°C à 850°C, pendant une période de temps prédéterminée pour former un verre opale ou dévitrifié à phases séparées; puis à immerger ce verre à phases séparées dans une solution d'acide pour extraire par lixiviation et éliminer les composants solubles dans l'acide, ce qui laisse un verre de titanate poreux ayant un rapport $TiO_2/SiO_2$ en poids dans la gamme de 0,8 à 1,7.

6. Procédé selon l'une quelconque des revendications 3 à 5, dans lequel lesdits produits de départ contiennent 18,0 à 28,0 mol % d'anhydride titanique, 38,0 à 28,0 mol % d'anhydride silicique, 10,0 à 12,5 mol % d'oxyde d'aluminium, 7,5 mol % d'anhydride borique, 21,0 à 22,5 mol % d'oxyde de calcium et 4,5 à 1,5 mol % d'oxyde de magnésium.

7. Procédé selon la revendication 5 ou 6, dans lequel ledit oxyde d'élément métallique, lorsqu'il est utilisé, est constitué par 0,5 à 1,0 mol % de $MoO_3$, de $SeO_3$ ou de $Ni_2O_3$.

# FIG. 1

MIXING OF STARTING MATERIALS → FUSION 1400°C → QUENCHING SHAPING SPINNING = RAW GLASS →

HEAT TREATMENT 600~900°C → SEPARATE-PHASE GLASS → ACID LEACHING → POROUS GLASS

ACID-SOLUBLE COMPONENTS

# FIG. 2

SPECIFIC SURFACE AREA ($m^2/g$) vs HEAT TREATMENT TEMPERATURE (°C)

# FIG. 3

AVERAGE PORE RADIUS(Å) vs HEAT TREATMENT TEMPERATURE (°C)

# FIG. 4

TG – mg vs TEMPERATURE ($\times 10^2$ °C)

TG, TG, 855°C, (a), EXOTHERMAL, DTA, 856°C, 798°C, (b), ENDOTHERMAL

FIG.5

FIG.6

FIG.7

FIG. 8

FIG. 9